# EUROPEAN PATENT APPLICATION

(11) **EP 4 811 524 A1**
(43) Date of publication of application: **23.09.2026**
(21) Application number: 25867218.7
(22) Date of filing: 20.10.2025
(51) Int. Cl.: H01M 50/383, H01M 50/105, H01M 50/176, H01M 50/183, H01M 50/204, H01M 50/211, H01M 50/30, H01M 50/342, H01M 50/367, H01M 50/502

(54) **BATTERY MODULE AND BATTERY PACK COMPRISING SAME**

(30) Priority: 08.11.2024 KR 20240157654
(71) Applicant: LG ENERGY SOLUTION, LTD., Seoul 07335 (KR)
(72) Inventor: Kim, Kwang Mo, Daejeon 34122 (KR); Jung, Hye Mi, Daejeon 34122 (KR)
(74) Representative: Plasseraud IP
(86) International application number: PCT/KR2025/016552
(87) International publication number: WO 2026/101051

(57) **Abstract**

A battery module according to some embodiments includes:
a plurality of pouch cells arranged in a first direction, wherein each of the plurality of pouch cells includes an electrode lead protruding in a second direction perpendicular to the first direction;
a module frame accommodating the plurality of pouch cells and open in the second direction;
busbars electrically connected to the plurality of electrode leads of the plurality of pouch cells; and
a busbar frame supporting the busbars and comprising a plurality of slits and a plurality of venting suppression parts, wherein
each of the plurality of pouch cells includes a center part where an electrode assembly is located, a gas pocket part at an edge of the center part, and a sealing part at an edge of the gas pocket part, wherein
the electrode lead of a corresponding one of the plurality of pouch cells passes through each of the plurality of slits, and
the plurality of venting suppression parts may overlap with a portion of the sealing part of a corresponding one of the plurality of pouch cells in the first direction.

Accordingly, a battery module according to some embodiments can suppress venting in the direction where the electrode lead is located and does not press the gas pocket of the pouch cell, thereby allowing the gas pocket of the pouch cell to perform its original function.

## Description

### [Technical Field]

The present disclosure relates to a battery module and a battery pack including the same.

This application claims the benefit of priority to Korean Patent Application No. 10-2024-0157654, filed on November 8, 2024, and the entire contents of Korean Patent Application No. 10-2024-0157654 are hereby incorporated by reference.

### [Background]

Secondary batteries can be repeatedly used for a long time through recharging. Secondary batteries are used in various fields such as mobility, portable electronic devices, and ESS (Energy Storage System). In particular, the demand for secondary batteries for mobility is increasing to reduce dependence on fossil fuels and reduce carbon emissions. However, concerns about the safety of secondary batteries remain an important issue to be addressed.

In the case of mobility, multiple battery cells are used to secure performance such as output and driving range. Generally, multiple battery cells constitute a battery module, and a battery pack composed of a plurality of battery modules is mounted on a vehicle. At this time, the multiple battery cells constituting the battery module are located adjacent to each other, and the battery modules constituting the battery pack are also located adjacent to each other. Therefore, when a thermal runaway event occurs in some battery cells, thermal propagation to adjacent battery cells easily occurs. If such thermal propagation occurs in a chain, a large explosion or fire may occur.

When a thermal runaway event occurs, high-temperature gas, flame, particles, etc. inside the battery cell may be vented in random directions. To prevent large explosions or fires, technology that can control the venting direction is required.

### [Summary]

### [Technical Problem]

The problem to be solved by the present disclosure is to provide a battery module capable of controlling the venting direction.

### [Technical Solution]

Some embodiments of the present disclosure that can solve the above problems are as follows.

According to some embodiments, the battery module includes:
a plurality of pouch cells arranged in a first direction, wherein each of the plurality of pouch cells includes an electrode lead protruding in a second direction perpendicular to the first direction;
a module frame accommodating the plurality of pouch cells and open in the second direction;
busbars electrically connected to the plurality of electrode leads of the plurality of pouch cells; and
a busbar frame supporting the busbars and comprising a plurality of slits and a plurality of venting suppression parts, wherein
each of the plurality of pouch cells includes a center part where an electrode assembly is located, a gas pocket part at an edge of the center part, and a sealing part at an edge of the gas pocket part, wherein
the electrode lead of a corresponding one of the plurality of pouch cells passes through each of the plurality of slits, and
the plurality of venting suppression parts may overlap with a portion of the sealing part of a corresponding one of the plurality of pouch cells in the first direction.

In some embodiments, each of the plurality of pouch cells has a rectangular shape, the sealing part includes a short side sealing part and a long side sealing part, and the plurality of venting suppression parts may overlap with the short side sealing part of a corresponding one of the plurality of pouch cells in the first direction.

In some embodiments, the plurality of battery cells includes a first battery cell including a first electrode lead and a first short side sealing part, the plurality of slits includes a first slit, the plurality of venting suppression parts includes a first venting suppression part and a second venting suppression part that guide the first electrode lead to the first slit, the first venting suppression part contacts one surface of the first short side sealing part, and the second venting suppression part may contact an opposite surface of the one surface of the first short side sealing part.

In some embodiments, the plurality of battery cells includes a first battery cell including a first electrode lead and a first short side sealing part, and a second battery cell including a second electrode lead and a second short side sealing part, the plurality of slits includes a first slit, the plurality of venting suppression parts includes a first venting suppression part that guides the first electrode lead to the first slit, a second venting suppression part that guides the second electrode lead to the first slit, and a third venting suppression part that guides the first electrode lead and the second electrode lead to the first slit and is located between the first venting suppression part and the second venting suppression part, the first venting suppression part contacts one surface of the first short side sealing part, the second venting suppression part contacts one surface of the second short side sealing part, and the third venting suppression part may contact an opposite surface of the one surface of the first short side sealing part and an opposite surface of the one surface of the second short side sealing part.

In some embodiments, the gas pocket part includes a short side gas pocket part and a long side gas pocket part, and the plurality of venting suppression parts may not overlap with the short side gas pocket part of a corresponding one of the plurality of pouch cells in the first direction.

In some embodiments, the gas pocket part includes a short side gas pocket part and a long side gas pocket part, and each of the plurality of venting suppression parts may overlap with the short side gas pocket part of a corresponding one of the plurality of pouch cells in the first direction.

In some embodiments, each of the plurality of venting suppression parts may not contact the short side gas pocket part of a corresponding one of the plurality of pouch cells.

In some embodiments, the module frame may include a top plate including a plurality of vent holes.

A battery pack according to some embodiments includes:
a pack housing including a base plate and side walls;
a plurality of battery modules on the pack housing; and
a lid covering the plurality of battery modules and coupled to the pack housing, wherein
each of the plurality of battery modules includes:
   a plurality of pouch cells arranged in a first direction, wherein each of the plurality of pouch cells includes an electrode lead protruding in a second direction perpendicular to the first direction;
   a module frame accommodating the plurality of pouch cells and open in the second direction;
   busbars short-circuited with the plurality of electrode leads of the plurality of pouch cells; and
   a busbar frame supporting the busbars and including a plurality of slits and a plurality of venting suppression parts, wherein
   each of the plurality of pouch cells includes a center part where an electrode assembly is located, a gas pocket part at an edge of the center part, and a sealing part at an edge of the gas pocket part,
   the electrode lead of a corresponding one of the plurality of pouch cells passes through each of the plurality of slits, and
   the plurality of venting suppression parts may overlap with a portion of the sealing part of a corresponding one of the plurality of pouch cells in the first direction.

In some embodiments, the module frame may include a top plate including a plurality of vent holes.

A battery pack according to some embodiments may further include at least one or more exhaust devices disposed on at least one of the side walls.

### [Advantageous Effects]

A battery module according to some embodiments of the present disclosure can suppress venting in the direction where the electrode lead is located and does not press the gas pocket of the pouch cell, thereby allowing the gas pocket of the pouch cell to perform its original function.

The effects of some embodiments of the present disclosure are not limited to the effects mentioned above, and other effects not mentioned can be clearly derived and understood by those skilled in the art to which the present disclosure belongs from the following description. That is, unintended effects resulting from implementing some embodiments of the present disclosure can also be clearly derived and understood by those skilled in the art to which the present disclosure belongs.

### [Brief Description of the Drawings]

FIG. 1 is a perspective view of a battery module according to some embodiments.
FIG. 2 is a partial exploded view of a battery module according to some embodiments.
FIG. 3 is a view showing a pouch cell.
FIG. 4 is a front view for explaining a plurality of pouch cells, a busbar frame, and busbars in more detail.
FIG. 5 is a perspective view for explaining a plurality of pouch cells, a busbar frame, and busbars in more detail.
FIG. 6 is a portion of a cross-sectinoal view taken along cutting line VI-VI' of FIG. 5.
FIG. 7 is a rear perspective view of a busbar frame.
FIG. 8 is a view showing a battery module according to other embodiments.
FIG. 9 is a view showing a battery module according to yet other embodiments.
FIG. 10 is a view showing a battery pack according to some embodiments.

### [Best Mode for Carrying out the Disclosure]

Terms or words used in the present disclosure should not be construed as being limited to conventional or dictionary meanings, and should be interpreted in accordance with the meanings consistent with the technical idea of the present disclosure based on the principle that the inventor can appropriately define the meanings of terms or words to describe his or her invention in the best way.

In the present disclosure, terms such as "include" or "have" are intended to designate that features, numbers, steps, operations, components, parts, or combinations thereof described in the present disclosure exist, and should be understood not to preclude in advance the existence or possibility of addition of one or more other features, numbers, steps, operations, components, parts, or combinations thereof. Also, when a part such as a layer, film, region, or plate is said to be "on" another part, this includes not only the case where it is "directly on" the other part, but also the case where there is another part in between. Conversely, when a part such as a layer, film, region, or plate is said to be "under" another part, this includes not only the case where it is "directly under" the other part, but also the case where there is another part in between.

The embodiments and drawings are merely examples of the present disclosure and do not represent all of the technical ideas of the present disclosure, so it should be understood that various equivalents and modifications that can replace them may exist.

In describing the present disclosure, if it is determined that a detailed description of a known configuration or function may obscure the gist of the present disclosure, the detailed description will be omitted.

Since the drawings are provided to more completely explain the present disclosure to those skilled in the art, the shapes, sizes, and numbers of components in the drawings may be exaggerated, omitted, or schematically illustrated for clearer explanation. The shape, size, ratio, and number of each component in the drawings do not entirely reflect the shape, size, ratio, and number of the actual components.

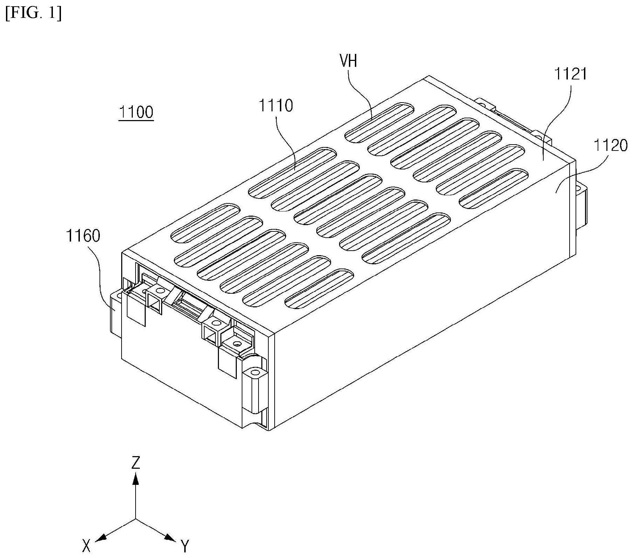

In the present disclosure, the positions of configurations, shapes of configurations, and relationships between configurations are described using a three-dimensional Cartesian coordinate system for convenience of explanation. The X-axis, Y-axis, and Z-axis are indicated in FIGS. 1 to 10. In this specification, "X direction" means a direction parallel to the X-axis. In this specification, "+X direction" means the same direction as the arrow direction of the X-axis indicated in FIGS. 1 to 10. In this specification, "-X direction" means the opposite direction to the arrow direction of the X-axis indicated in FIGS. 1 to 10. In this specification, "Y direction" means a direction parallel to the Y-axis. In this specification, "+Y direction" means the same direction as the arrow direction of the Y-axis indicated in FIGS. 1 to 10. In this specification, "-Y direction" means the opposite direction to the arrow direction of the Y-axis indicated in FIGS. 1 to 10. In this specification, "Z direction" means a direction parallel to the Z-axis. In this specification, "+Z direction" means the same direction as the arrow direction of the Z-axis indicated in FIGS. 1 to 10. In this specification, "-Z direction" means the opposite direction to the arrow direction of the Z-axis indicated in FIGS. 1 to 10.

Hereinafter, embodiments of the present disclosure will be described in detail with reference to the drawings.

### (First embodiment)

FIG. 1 is a perspective view of a battery module 1100 according to some embodiments.

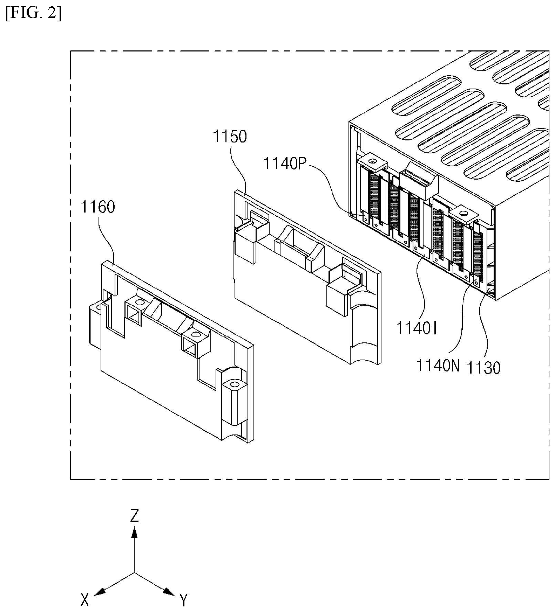

FIG. 2 is a partial exploded view of the battery module 1100 according to some embodiments.

Referring to FIGS. 1 and 2, the battery module 1100 may include a plurality of pouch cells 1110, a module frame 1120, a busbar frame 1130, busbars 1140P, 1140I, 1140N, an insulation cover 1150, and an end plate 1160.

Each of the plurality of pouch cells 1110 may include an electrode assembly, electrode tabs, electrode leads 1111N, 1111P, an electrolyte, and a pouch film.

The electrode assembly may include a positive electrode, a negative electrode, and a separator. The positive electrode may include a positive electrode active material layer and a positive electrode current collector. The negative electrode may include a negative electrode active material layer and a negative electrode current collector. The electrode assembly may be of a jelly-roll type or a stack-type. The jelly-roll type may have a structure where the positive electrode, negative electrode, and separator are wound. The stack-type may have a structure where a first electrode unit containing a first positive electrode, a first negative electrode, and a first separator, and a second electrode unit containing a second positive electrode, a second negative electrode, and a second separator, are stacked with a third separator in between. The electrolyte may be a liquid type or a gel type.

Electrode tabs may include positive tabs and negative electrode tabs. The positive electrode tabs may be coupled to the positive electrode current collector. The positive electrode tabs may be welded to the positive electrode current collector. The negative electrode tabs may be coupled to the negative electrode current collector. The negative electrode tabs may be welded to the negative electrode current collector.

Electrode leads 1111N may be coupled to the negative electrode tabs. Electrode leads 1111N may be welded to the negative electrode tabs. Electrode leads 1111P may be coupled to the positive electrode tabs. Electrode leads 1111P may be welded to the positive electrode tabs. The electrode lead 1111N and the electrode lead 1111P may protrude in opposite directions or in the same direction. This disclosure describes only embodiments where the electrode lead 1111N and the electrode lead 1111P protrude in opposite directions. A person skilled in the art to which the present disclosure pertains will readily arrive at embodiments where the electrode lead 1111N and the electrode lead 1111P protrude in the same direction based on the present disclosure.

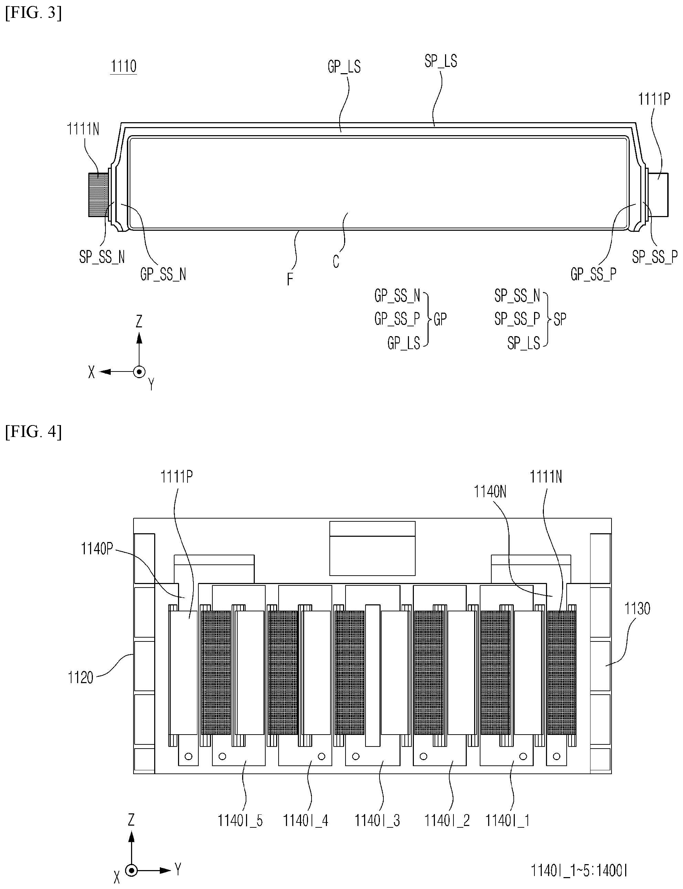

FIG. 3 is a drawing showing a pouch cell 1110.

Referring to FIG. 3, the pouch cell 1110 may have a generally rectangular shape. The pouch cell 1110 may include a center part C, a gas pocket part GP, a sealing part SP, and a folding part F.

An electrode assembly may be located in the center part C. The center part C may be a portion protruding in the Y-direction within the pouch cell 1110. The length of the center part C in the Y-direction may be greater than the length of the gas pocket part GP in the Y-direction. The Y-direction length of the center part C may be greater than the Y-direction length of the sealing part (SP). The Y-direction length of the center part C may be greater than the Y-direction length of the folding part F.

The gas pocket part GP may be located at the edge of the center part C. The gas pocket part GP may not be sealed. Gas may be generated inside the pouch cell 1110 even if a thermal runaway event does not occur in the pouch cell 1110, when the pouch cell 1110 undergoes a plurality of charge-discharge cycles or when the temperature of the pouch cell 1110 rises above a certain level. The gas pocket part GP can accommodate gas generated inside the pouch cell 1110. The gas pocket part GP, having accommodated gas generated inside the pouch cell 1110, can expand.

The gas pocket part GP may include short side gas pocket parts GP_SS_N, GP_SS_P and a long side gas pocket part GP_LS. The short side gas pocket parts GP_SS_N, GP_SS_P may be spaced apart from each other in the X direction with the center part C in between. The short side gas pocket part GP_SS_N may connect to the center part C in the +X direction. The short side gas pocket part GP_SS_P may connect to the center part C in the -X direction. The long side gas pocket part GP_LS may connect to the center part C in the +Z direction. The +X-direction end of the long side gas pocket part GP_LS may connect to the +Z-direction end of the short side gas pocket part GP_SS_N. The -X-direction end of the long side gas pocket part GP_LS may connect to the +Z-direction end of the short side gas pocket part GP_SS_P.

The sealing part SP may be located at the edge of the gas pocket part GP. The sealing part SP may be a portion where the pouch film of the pouch cell 1110 is bonded, for example, by heat sealing. As described above, even if gas is generated inside the pouch cell 1110 and the internal pressure of the pouch cell 1110 increases, the sealing state of the pouch cell 1110 can be maintained by the sealing part SP. However, if an accident such as a thermal runaway event occurs in the pouch cell 1110, causing the internal pressure to become excessively high, the sealing of the sealing part SP may be released, thereby releasing the sealing state of the pouch cell 1110.

The sealing part SP may include short side sealing parts SP_SS_N, SP_SS_P and a long side sealing part SP_LS. The short side sealing parts SP_SS_N, SP_SS_P may be spaced apart in the X direction, with the center part C and the short side gas pocket parts GP_SS_N, GP_SS_P positioned between them. The short side sealing part SP_SS_N may connect to the short side gas pocket part GP_SS_N in the +X direction. The short side sealing part SP_SS_P can connect to the short side gas pocket part GP_SS_P in the -X direction. The long side sealing part SP_LS can connect to the long side gas pocket part GP_LS in the +Z direction. The end of the long side sealing part SP_LS in the +X direction can be connected to the end of the short side sealing part SP_SS_N in the +Z direction. The end of the long side sealing part SP_LS in the -X direction can be connected to the end of the short side sealing part SP_SS_P in the +Z direction.

The folding part F may be located at the edge of the center part C. The folding part F may not be sealed. The folding part F may be connected to the center part C in the -Z direction. The folding part F may be formed during the process of folding a single pouch film to place an electrode assembly and an electrode tab on it, such that the single pouch film wraps around the electrode assembly and the electrode tab. When using two pouch films (e.g., placing the electrode assembly and electrode tabs on one pouch film, covering them with another pouch film, and then bonding the two pouch films together by heat sealing, etc.), a sealing part SP may be located at the folding part F.

The electrode leads 1111N, 1111P may protrude in the X direction. In FIG. 3, the electrode lead 1111N protrudes in the +X direction and the electrode lead 1111P protrudes in the -X direction, but this is merely illustrative. Conversely, the electrode lead 1111N may protrude in the -X direction and the electrode lead 1111P may protrude in the +X direction.

The short side gas pocket part GP_SS_N may be located between the short side sealing part SP_SS_N and the center part C. The short side gas pocket part GP_SS_P may be located between the short side sealing part SP_SS_P and the center part C. The short side sealing part SP_SS_N may be located between the electrode lead 1111N and the short side gas pocket part GP_SS_N. The short side sealing part SP_SS_P may be located between the electrode lead 1111P and the short side gas pocket part GP_SS_P.

The module frame 1120 can accommodate a plurality of pouch cells 1110. The module frame 1120 can be open in the X direction. The module frame 1120 can include a top plate 1121 including a plurality of vent holes VH. The module frame 1120 may be formed by coupling a U-frame and a top plate 1121 using methods such as welding. The module frame 1120 may be an integral mono-frame, wherein the top plate 1121 may be part of the mono-frame.

Referring again to FIG. 2, the busbar frame 1130 can cover the opening part of the module frame 1120 in the +X direction. The busbar frame 1130 can cover a plurality of pouch cells 1110 in the +X direction. The busbar frame 1130 can support the busbars 1140P, 1140I, 1140N. The busbar frame 1130 may be positioned between the busbars 1140P, 1140I, 1140N and the electrode assemblies of the plurality of pouch cells 1110. The material of the busbar frame 1130 may be a material with high electrical insulation and fire resistance.

The busbars 1140P, 1140I, 1140N may enable parallel and/or series connections of the plurality of pouch cells 1110. A portion of the busbars 1140P, 1140N may be exposed outside the battery module 1000. Electrical connection between the battery module 1000 and an external system may be achieved via portions of the busbars 1140P, 1140N. The busbar 1140I may be positioned between the busbars 1140P, 1140N. The busbar 1140I may have an approximately O-shaped configuration.

The insulation cover 1150 may cover the busbar frame 1130 and the busbars 1140P, 1140I, 1140N in the +X direction. The insulation cover 1150 may include holes and support parts. Through the holes, portions of the busbars 1140P, 1140N may be exposed outside the battery module 1000. The support parts may support portions of the busbars 1140P, 1140N. The material of the insulation cover may be a material with high electrical insulation and fire resistance.

The end plate 1160 may cover the insulation cover 1150 in the +X direction. The end plate 1160 may include holes. Through these holes, portions of the busbars 1140P, 1140N may be exposed outside the battery module 1000. The material of the end plate 1160 may be a material with high rigidity and heat resistance.

FIG. 4 is a front view for further illustrating the plurality of pouch cells 1110, the busbar frame 1130, and the busbars 1140P, 1140I, 1140N.

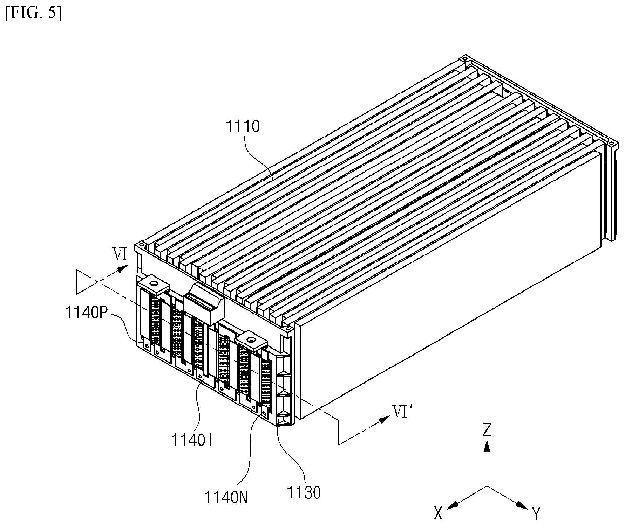

FIG. 5 is a perspective view illustrating the plurality of pouch cells 1110, the busbar frame 1130, and the busbars 1140P, 1140I, 1140N in greater detail.

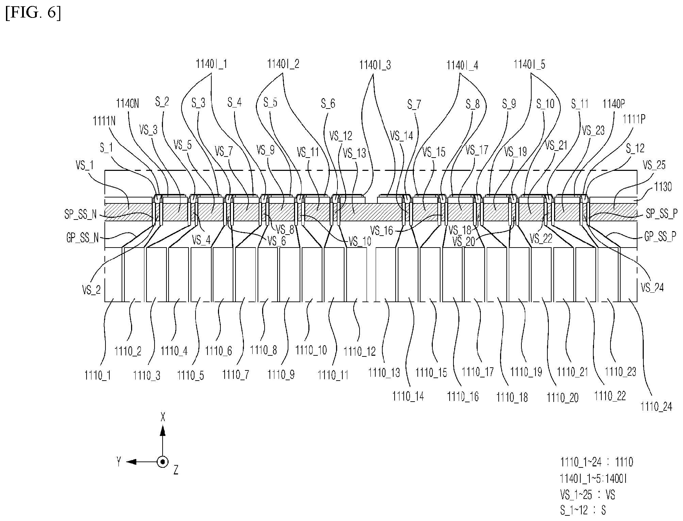

FIG. 6 is a portion of a cross-sectional view taken along the cutting line VI-VI' of FIG. 5.

Referring to FIGS. 4 through 6, a plurality of pouch cells 1110 may be arranged in the Y direction. The plurality of pouch cells 1110 may be configured into a plurality of banks. Each of the plurality of banks may comprise one or more pouch cells 1110 connected in parallel with each other. The plurality of banks may be connected in series with each other. When the plurality of pouch cells 1110 are composed of n banks, and each of the n banks is composed of m pouch cells, the connection method of the plurality of pouch cells 1110 may be referred to as m parallel-n series.

The number of pouch cells 1110, the number of banks, the number of pouch cells constituting each bank, and the connection method of the pouch cells 1110 may be determined based on the required current and voltage magnitude for the battery module 1000. This disclosure describes only one embodiment. A person skilled in the art to which the present disclosure pertains will readily arrive at other embodiments based on the present disclosure.

The electrode leads 1111N of the pouch cells 1110_1, 1110_2, 1110_5, 1110_6, 1110_9, 1110_10, 1110_13, 1110_14, 1110_17, 1110_18, 1110_21, 1110_22 may protrude in the +X direction. The electrode leads 1111P of the pouch cells 1110_3, 1110_4, 1110_7, 1110_8, 1110_11, 1110_12, 1110_15, 1110_16, 1110_19, 1110_20, 1110_23, 1110_24 may protrude in the +X direction.

The electrode leads 1111N of the pouch cells 1110_1, 1110_2 may be coupled to the busbar 1140N by welding or similar methods. The pouch cells 1110_1, 1110_2 may be connected in parallel to form a first bank. The electrode leads 1111P of the pouch cells 1110_3, 1110_4 can be coupled to the busbar 1140I_1 by methods such as welding. The pouch cells 1110_3, 1110_4 can be connected in parallel to each other to form a second bank. The electrode leads 1111N of the pouch cells 1110_5, 1110_6 can be connected to the bus bar 1140I_1 by methods such as welding. The pouch cells 1110_5, 1110_6 can be connected in parallel to each other to form a third bank. The electrode leads 1111P of the pouch cells 1110_7, 1110_8can be coupled to the busbar 1140I_2 by methods such as welding. The pouch cells 1110_7, 1110_8 can be connected in parallel to form a fourth bank. The electrode leads 1111N of the pouch cells 1110_9, 1110_10 can be coupled to the busbar 1140I_2 by methods such as welding. The pouch cells 1110_9, 1110_10 can be connected in parallel to form the fifth bank. The electrode leads 1111P of the pouch cells 1110_11, 1110_12 can be coupled to the busbar 1140I_3 by methods such as welding. The pouch cells 1110_11, 1110_12 can be connected in parallel to form the sixth bank. The electrode leads 1111N of the pouch cells 1110_13, 1110_14 can be coupled to the busbar 1140I_3 by methods such as welding. The pouch cells 1110_13, 1110_14 can be connected in parallel to each other to form the seventh bank. The electrode leads 1111P of the pouch cells 1110_15, 1110_16 can be coupled to the busbar 1140I_4 by methods such as welding. The pouch cells 1110_15, 1110_16 can be connected in parallel to form the eighth bank. The electrode leads 1111N of the pouch cells 1110_17, 1110_18 can be coupled to the busbar 1140I_4 by methods such as welding. The pouch cells 1110_17, 1110_18 can be connected in parallel to form the ninth bank. The electrode leads 1111P of the pouch cells 1110_19, 1110_20 can be coupled to the busbar 1140I_5 by methods such as welding. The pouch cells 1110_19, 1110_20 can be connected in parallel to form the tenth bank. The electrode leads 1111N of the pouch cells 1110_21, 1110_22 can be coupled to the busbar 1140I_5 by methods such as welding. The pouch cells 1110_21, 1110_22 can be connected in parallel to form the 11th bank. The electrode leads 1111P of the pouch cells 1110_23, 1110_24 can be coupled to the busbar 1140P by methods such as welding. The pouch cells 1110_23, 1110_24 can be connected in parallel to form the twelfth bank. The first to twelfth banks can be connected in series with each other. The connection method of the pouch cells 1110_1~24 can be 2P-12S.

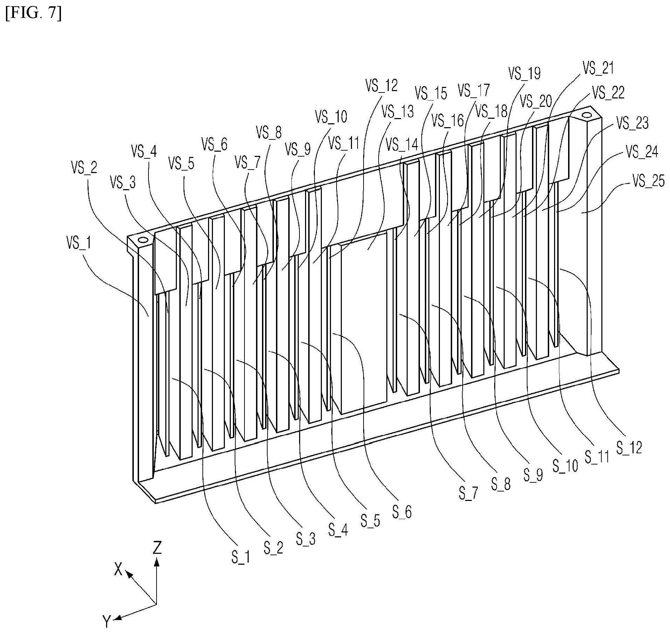

FIG. 7 is a rear perspective view of the busbar frame 1130.

Referring to FIG. 7, the busbar frame 1130 may include a plurality of slits S and a plurality of venting suppression parts VS. The venting suppression part VS can minimize the stress applied to the short side sealing part S_SS_N or S_SS_P of the pouch cell 1110 due to the internal pressure of the pouch cell 1110. The venting suppression part VS can suppress the venting of high-temperature gas, flames, or particles from the pouch cell 1110 through the short side sealing part S_SS_N or S_SS_P of the pouch cell 1110. It can also guide the high-temperature gas, flames, or particles inside the pouch cell 1110 to vent through the long side sealing part SP_LS of the pouch cell 1110. The venting suppression part VS may not compress the short side gas pocket part GP_SS_N or GP_SS_P of the pouch cell 1110. Accordingly, the short side gas pocket part GP_SS_N or GP_SS_P can accommodate gas generated inside the pouch cell 1110, thereby performing its original function as a gas pocket part.

Each of the plurality of slits S may extend in the Z direction. The plurality of slits S may be spaced apart from each other in the Y direction. Each of the plurality of venting suppression parts VS may protrude in the -X direction. The plurality of venting suppression parts VS may be spaced apart from each other in the Y direction.

Referring again to FIG. 6, the electrode leads 1111N or 1111P of corresponding ones of the plurality of pouch cells 1110 can pass through each of the plurality of slits S. The electrode lead 1111N of pouch cells 1110_1, 1110_1 can pass through slit S_1. The electrode leads 1111P of pouch cells 1110_3, 1110_4 can pass through slit S_2. The electrode leads 1111N of pouch cells 1110_5, 1110_6 can pass through slit S_3. The electrode leads 1111P of pouch cells 1110_7, 1110_8 can pass through slit S_4. The electrode leads 1111N of pouch cells 1110_9, 1110_10 can pass through slit S_5. The electrode leads 1111P of pouch cells 1110_11, 1110_12 can pass through slit S_6. The electrode leads 1111N of pouch cells 1110_13, 1110_14 can pass through slit S_7. The electrode leads 1111P of the pouch cells 1110_15, 1110_16 can pass through slit S_8. Slit S_9 allows the electrode leads 1111N of pouch cells 1110_17, 1110_18 to pass through. Slit S_10 allows the electrode leads 1111P of pouch cells 1110_19, 1110_20 to pass through. The electrode leads 1111N of pouch cells 1110_21, 1110_22 can pass through slit S_11. The electrode leads 1111P of pouch cells 1110_23, 1110_24 can pass through slit S_12.

Each of the plurality of venting suppression parts VS can guide the electrode lead 1111N or 1111P of the corresponding one of the plurality of pouch cells 1110 through the corresponding one of the plurality of slits S. The venting suppression part VS_1 can guide the electrode lead 1111N of the pouch cell 1110_1 into the slit S_1. The venting suppression part VS_2 can guide the electrode lead 1111N of the pouch cell 1110_1 and the electrode lead 1111N of the pouch cell 1110_2 into the slit S_1. The venting suppression part VS_3 can guide the electrode lead 1111N of the pouch cell 1110_2 into the slit S_1 and guide the electrode lead 1111P of the pouch cell 1110_3 into the slit S_2. The venting suppression part VS_4 can guide the electrode lead 1111P of the pouch cell 1110_3 and the electrode lead 1111P of the pouch cell 1110_4 into the slit S_2. The venting suppression part VS_5 can guide the electrode lead (1111P of the pouch cell 1110_4 into the slit S_2 and guide the electrode lead 1111N of the pouch cell 1110_5 into the slit S_3. The venting suppression part VS_6 can guide the electrode lead 1111N of the pouch cell 1110_5 and the electrode lead 1111N of the pouch cell 1110_6 into the slit S_3. The venting suppression part VS_7 can guide the electrode lead 1111N of the pouch cell 1110_6 into the slit S_3 and guide the electrode lead 1111P of the pouch cell 1110_7 into the slit S_4. The venting suppression part VS_8 can guide the electrode lead 1111P of the pouch cell 1110_7 and the electrode lead 1111P of the pouch cell 1110_8 into the slit S_4. The venting suppression part VS_9 can guide the electrode lead 1111P of the pouch cell 1110_8 into the slit S_4 and guide the electrode lead 1111N of the pouch cell 1110_9 into the slit S_5. The venting suppression part VS_10 can guide the electrode lead 1111N of the pouch cell 1110_9 and the electrode lead 1111N of the pouch cell 1110_10 through the slit S_5. The venting suppression part VS_11 can guide the electrode lead 1111N of the pouch cell 1110_10 into the slit S_5 and guide the electrode lead 1111P of the pouch cell 1110_11 into the slit S_6. The venting suppression part VS_12 can guide the electrode lead 1111P of the pouch cell 1110_11 and the electrode lead 1111P of the pouch cell 1110_12 through the slit S_6. The venting suppression part VS_13 can guide the electrode lead 1111P of the pouch cell 1110_12 into the slit S_6 and guide the electrode lead 1111N of the pouch cell 1110_13 into the slit S_7. The venting suppression part VS_14 can guide the electrode lead 1111N of the pouch cell 1110_13 and the electrode lead 1111N of the pouch cell 1110_14 through the slit S_7. The venting suppression part VS_15 can guide the electrode lead 1111N of the pouch cell 1110_14 into the slit S_7 and guide the electrode lead 1111P of the pouch cell 1110_15 into the slit S_8. The venting suppression part VS_16 can guide the electrode lead 1111P of the pouch cell 1110_15 and the electrode lead 1111P of the pouch cell 1110_16 through the slit S_8. The venting suppression part VS_17 can guide the electrode lead 1111P of the pouch cell 1110_16 into the slit S_8 and guide the electrode lead 1111N of the pouch cell 1110_17 into the slit S_9. The venting suppression part VS_18 can guide the electrode lead 1111N of the pouch cell 1110_17 and the electrode lead 1111N of the pouch cell 1110_18 through the slit S_9. The venting suppression part VS_19 can guide the electrode lead 1111N of the pouch cell 1110_18 into the slit S_9 and guide the electrode lead 1111P of the pouch cell 1110_19 into the slit S_10. The venting suppression part VS_20 can guide the electrode lead 1111P of the pouch cell 1110_19 and the electrode lead 1111P of the pouch cell 1110_20 through the slit S_10. The venting suppression part VS_21 can guide the electrode lead 1111P of the pouch cell 1110_20 into the slit S_10 and guide the electrode lead 1111N of the pouch cell 1110_21 into the slit S_11. The venting suppression part VS_22 can guide the electrode lead 1111N of the pouch cell 1110_21 and the electrode lead 1111N of the pouch cell 1110_22 through the slit S_11. The venting suppression part VS_23 can guide the electrode lead 1111N of the pouch cell 1110_22 into the slit S_11 and guide the electrode lead 1111P of the pouch cell 1110_23 into the slit S_12. The venting suppression part VS_24 can guide the electrode lead 1111P of the pouch cell 1110_23 and the electrode lead 1111P of the pouch cell 1110_24 through the slit S_12. The venting suppression part VS_25 can guide the electrode lead 1111P of the pouch cell 1110_24 into the slit S_12.

Each of the plurality of venting suppression parts VS can overlap with the corresponding short side sealing part S_SS_N or S_SS_P of the plurality of pouch cells 1110 in the Y direction. The venting suppression part VS_1 can overlap with the short side sealing part SP_SS_N of the pouch cell 1110_1 in the Y direction. The venting suppression part VS_2 can overlap with the short side sealing part SP_SS_N of the pouch cell 1110_1 and the short side sealing part SP_SS_N of the pouch cell 1110_2 in the Y direction. The venting suppression part VS_3 may overlap with the short side sealing part SP_SS_N of the pouch cell 1110_2 and the short side sealing part SP_SS_P of the pouch cell 1110_3 in the Y direction. The venting suppression part VS_4 may overlap with the short side sealing part SP_SS_P of the pouch cell 1110_3 and the short side sealing part SP_SS_P of the pouch cell 1110_4 in the Y direction. The venting suppression part VS_5 may overlap with the short side sealing part SP_SS_P of the pouch cell 1110_4 and the short side sealing part SP_SS_N of the pouch cell 1110_5 in the Y direction. The venting suppression part VS_6 may overlap with the short side sealing part SP_SS_N of the pouch cell 1110_5 and the short side sealing part SP_SS_N of the pouch cell 1110_6 in the Y direction. The venting suppression part VS_7 may overlap with the short side sealing part SP_SS_N of the pouch cell 1110_6 and the short side sealing part SP_SS_P of the pouch cell 1110_7 in the Y direction. The venting suppression part VS_8 may overlap with the short side sealing part SP_SS_P of the pouch cell 1110_7 and the short side sealing part SP_SS_P of the pouch cell 1110_8 in the Y direction. The venting suppression part VS_9 may overlap with the short side sealing part SP_SS_P of the pouch cell 1110_8 and the short side sealing part SP_SS_N of the pouch cell 1110_9 in the Y direction. The venting suppression part VS_10 may overlap with the short side sealing part SP_SS_N of the pouch cell 1110_9 and the short side sealing part SP_SS_N of the pouch cell 1110_10 in the Y direction. The venting suppression part VS_11 may overlap with the short side sealing part SP_SS_N of the pouch cell 1110_10 and the short side sealing part SP_SS_P of the pouch cell 1110_11 in the Y direction. The venting suppression part VS_12 may overlap with the short side sealing part SP_SS_P of the pouch cell 1110_11 and the short side sealing part SP_SS_P of the pouch cell 1110_12 in the Y direction. The venting suppression part VS_13 may overlap with the short side sealing part SP_SS_P of the pouch cell 1110_12 and the short side sealing part SP_SS_N of the pouch cell 1110_13 in the Y direction. The venting suppression part VS_14 may overlap with the short side sealing part SP_SS_N of the pouch cell 1110_13 and the short side sealing part SP_SS_N of the pouch cell 1110_14 in the Y direction. The venting suppression part VS_15 may overlap with the short side sealing part SP_SS_N of the pouch cell 1110_14 and the short side sealing part SP_SS_P of the pouch cell 1110_15 in the Y direction. The venting suppression part VS_16 may overlap with the short side sealing part SP_SS_P of the pouch cell 1110_15 and the short side sealing part SP_SS_P of the pouch cell 1110_16 in the Y direction. The venting suppression part VS_17 may overlap with the short side sealing part SP_SS_P of the pouch cell 1110_16 and the short side sealing part SP_SS_N of the pouch cell 1110_17 in the Y direction. The venting suppression part VS_18 may overlap with the short side sealing part SP_SS_N of the pouch cell 1110_17 and the short side sealing part SP_SS_N of the pouch cell 1110_18 in the Y direction. The venting suppression part VS_19 may overlap with the short side sealing part SP_SS_N of the pouch cell 1110_18 and the short side sealing part SP_SS_P of the pouch cell 1110_19 in the Y direction. The venting suppression part VS_20 may overlap with the short side sealing part SP_SS_P of the pouch cell 1110_19 and the short side sealing part SP_SS_P of the pouch cell 1110_20 in the Y direction. The venting suppression part VS_21 may overlap with the short side sealing part SP_SS_P of the pouch cell 1110_20 and the short side sealing part SP_SS_N of the pouch cell 1110_21 in the Y direction. The venting suppression part VS_22 may overlap with the short side sealing part SP_SS_N of the pouch cell 1110_21 and the short side sealing part SP_SS_N of the pouch cell 1110_22 in the Y direction. The venting suppression part VS_23 may overlap with the short side sealing part SP_SS_N of the pouch cell 1110_22 and the short side sealing part SP_SS_P of the pouch cell 1110_23 in the Y direction. The venting suppression part VS_24 may overlap with the short side sealing part SP_SS_P of the pouch cell 1110_23 and the short side sealing part SP_SS_P of the pouch cell 1110_24 in the Y direction. The venting suppression part VS_25 may overlap with the short side sealing part SP_SS_P of the pouch cell 1110_24 in the Y direction.

Each of the plurality of venting suppression parts VS may contact one surface of the corresponding short side sealing part S_SS_N or S_SS_P of the plurality of pouch cells 1110. The venting suppression part VS_1 may contact one surface of the short side sealing part SP_SS_N of the pouch cell 1110_1. The venting suppression part VS_2 may contact the opposite surface of the one surface of the short side sealing part SP_SS_N of the pouch cell 1110_1. The venting suppression part VS_2 may contact one surface of the short side sealing part SP_SS_N of the pouch cell 1110_2. The venting suppression part VS_3 may contact the opposite surface of the short side sealing part SP_SS_N of the pouch cell 1110_2. The venting suppression part VS_3 may contact one surface of the short side sealing part SP_SS_P of the pouch cell 1110_3. The venting suppression part VS_4 may contact the opposite surface of the one surface of the short side sealing part SP_SS_P of the pouch cell 1110_3. The venting suppression part VS_4 may contact one surface of the short side sealing part SP_SS_P of the pouch cell 1110_4. The venting suppression part VS_5 may contact the opposite surface of the one surface of the short side sealing part SP_SS_P of the pouch cell 1110_4. The venting suppression part VS_5 may contact one surface of the short side sealing part SP_SS_N of the pouch cell 1110_5. The venting suppression part VS_6 may contact the opposite surface of the one surface of the short side sealing part SP_SS_N of the pouch cell 1110_5. The venting suppression part VS_6 may contact one surface of the short side sealing part SP_SS_N of the pouch cell 1110_6. The venting suppression part VS_7 may contact the opposite surface of the one surface of the short side sealing part SP_SS_N of the pouch cell 1110_6. The venting suppression part VS_7 may contact one surface of the short side sealing part SP_SS_P of the pouch cell 1110_7. The venting suppression part VS_8 may contact the opposite surface of the one surface of the short side sealing part SP_SS_P of the pouch cell 1110_7. The venting suppression part VS_8 may contact one surface of the short side sealing part SP_SS_P of the pouch cell 1110_8. The venting suppression part VS_9 may contact the opposite surface of the one surface of the short side sealing part SP_SS_P of the pouch cell 1110_8. The venting suppression part VS_9 may contact one surface of the short side sealing part SP_SS_N of the pouch cell 1110_9. The venting suppression part VS_10 may contact the opposite surface of the short side sealing part SP_SS_N of the pouch cell 1110_9. The venting suppression part VS_10 may contact one surface of the short side sealing part SP_SS_N of the pouch cell 1110_10. The venting suppression part VS_11 may contact the opposite surface of the one surface of the short side sealing part SP_SS_N of the pouch cell 1110_10. The venting suppression part VS_11 may contact one surface of the short side sealing part SP_SS_P of the pouch cell 1110_11. The venting suppression part VS_12 may contact the opposite surface of the short side sealing part SP_SS_P of the pouch cell 1110_11. The venting suppression part VS_12 may contact one surface of the short side sealing part SP_SS_P of the pouch cell 1110_12. The venting suppression part VS_13 may contact the opposite surface of the short side sealing part SP_SS_P of the pouch cell 1110_12. The venting suppression part VS_13 may contact one surface of the short side sealing part SP_SS_N of the pouch cell 1110_13. The venting suppression part VS_14 may contact the opposite surface of the short side sealing part SP_SS_N of the pouch cell 1110_13. The venting suppression part VS_14 may contact one surface of the short side sealing part SP_SS_N of the pouch cell 1110_14. The venting suppression part VS_15 may contact the opposite surface of the short side sealing part SP_SS_N of the pouch cell 1110_14. The venting suppression part VS_15 may contact one surface of the short side sealing part SP_SS_P of the pouch cell 1110_15. The venting suppression part VS_16 may contact the opposite surface of the short side sealing part SP_SS_P of the pouch cell 1110_15. The venting suppression part VS_16 may contact one surface of the short side sealing part SP_SS_P of the pouch cell 1110_16. The venting suppression part VS_17 may contact the opposite surface of the short side sealing part SP_SS_P of the pouch cell 1110_16. The venting suppression part VS_17 may contact one surface of the short side sealing part SP_SS_N of the pouch cell 1110_17. The venting suppression part VS_18 may contact the opposite surface of the short side sealing part SP_SS_N of the pouch cell 1110_17. The venting suppression part VS_18 may contact one surface of the short side sealing part SP_SS_N of the pouch cell 1110_18. The venting suppression part VS_19 may contact the opposite surface of the one surface of the short side sealing part SP_SS_N of the pouch cell 1110_18. The venting suppression part VS_19 may contact one surface of the short side sealing part SP_SS_P of the pouch cell 1110_19. The venting suppression part VS_20 may contact the opposite surface of the short side sealing part SP_SS_P of the pouch cell 1110_19. The venting suppression part VS_20 may contact one surface of the short side sealing part SP_SS_P of the pouch cell 1110_20. The venting suppression part VS_21 may contact the opposite surface of the short side sealing part SP_SS_P of the pouch cell 1110_20. The venting suppression part VS_21 may contact one surface of the short side sealing part SP_SS_N of the pouch cell 1110_21. The venting suppression part VS_22 may contact the opposite surface of the short side sealing part SP_SS_N of the pouch cell 1110_21. The venting suppression part VS_22 may contact one surface of the short side sealing part SP_SS_N of the pouch cell 1110_22. The venting suppression part VS_23 may contact the opposite surface of the short side sealing part SP_SS_N of the pouch cell 1110_22. The venting suppression part VS_23 may contact one surface of the short side sealing part SP_SS_P of the pouch cell 1110_23. The venting suppression part VS_24 may contact the opposite surface of the short side sealing part SP_SS_P of the pouch cell 1110_23. The venting suppression part VS_24 may contact one surface of the short side sealing part SP_SS_P of the pouch cell 1110_24. The venting suppression part VS_25 may contact the opposite surface of the one surface of the short side sealing part SP_SS_P of the pouch cell 1110_24.

Each of the plurality of venting suppression parts VS may not overlap in the Y direction with the corresponding short side gas pocket part GP_SS_N or GP_SS_P of the plurality of pouch cells 1110. The venting suppression part VS_1 may not overlap with the short side gas pocket part GP_SS_N of the pouch cell 1110_1 in the Y direction. The venting suppression part VS_2 may not overlap with the short side gas pocket part GP_SS_N of pouch cell 1110_1 and the short side gas pocket part GP_SS_N of pouch cell 1110_2 in the Y direction. The venting suppression part VS_3 may not overlap with the short side gas pocket part GP_SS_N of pouch cell 1110_2 and the short side gas pocket part GP_SS_P of pouch cell 1110_3 in the Y-direction. The venting suppression part VS_4 may not overlap with the short side gas pocket part GP_SS_P of pouch cell 1110_3 and the short side gas pocket part GP_SS_P of pouch cell 1110_4 in the Y-direction. The venting suppression part VS_5 may not overlap with the short side gas pocket part GP_SS_P of pouch cell 1110_4 and the short side gas pocket part GP_SS_N of pouch cell 1110_5 in the Y direction. The venting suppression part VS_6 may not overlap with the short side gas pocket part GP_SS_N of pouch cell 1110_5 and the short side gas pocket part GP_SS_N of pouch cell 1110_6 in the Y direction. The venting suppression part VS_7 may not overlap with the short side gas pocket part GP_SS_N of pouch cell 1110_6 and the short side gas pocket part GP_SS_P of pouch cell 1110_7 in the Y direction. The venting suppression part VS_8 may not overlap with the short side gas pocket part GP_SS_P of pouch cell 1110_7 and the short side gas pocket part GP_SS_P of pouch cell 1110_8 in the Y-direction. The venting suppression part VS_9 may not overlap with the short side gas pocket part GP_SS_P of pouch cell 1110_8 and the short side gas pocket part GP_SS_N of pouch cell 1110_9 in the Y direction. The venting suppression part VS_10 may not overlap with the short side gas pocket part GP_SS_N of pouch cell 1110_9 and the short side gas pocket part GP_SS_N of pouch cell 1110_10 in the Y direction. The venting suppression part VS_11 may not overlap with the short side gas pocket part GP_SS_N of the pouch cell 1110_10 and the short side gas pocket part GP_SS_P of the pouch cell 1110_11 in the Y direction. The venting suppression part VS_12 may not overlap with the short side gas pocket part GP_SS_P of the pouch cell 1110_11 and the short side gas pocket part GP_SS_P of the pouch cell 1110_12 in the Y direction. The venting suppression part VS_13 may not overlap with the short side gas pocket part GP_SS_P of the pouch cell 1110_12 and the short side gas pocket part GP_SS_N of the pouch cell 1110_13 in the Y direction. The venting suppression part VS_14 may not overlap with the short side gas pocket part GP_SS_N of the pouch cell 1110_13 and the short side gas pocket part GP_SS_N of the pouch cell 1110_14 in the Y direction. The venting suppression part VS_15 may not overlap with the short side gas pocket part GP_SS_N of the pouch cell 1110_14 and the short side gas pocket part GP_SS_P of the pouch cell 1110_15 in the Y direction. The venting suppression part VS_16 may not overlap with the short side gas pocket part GP_SS_P of the pouch cell 1110_15 and the short side gas pocket part GP_SS_P of the pouch cell 1110_16 in the Y direction. The venting suppression part VS_17 may not overlap with the short side gas pocket part GP_SS_P of the pouch cell 1110_16 and the short side gas pocket part GP_SS_N of the pouch cell 1110_17 in the Y direction. The venting suppression part VS_18 may not overlap with the short side gas pocket part GP_SS_N of the pouch cell 1110_17 and the short side gas pocket part GP_SS_N of the pouch cell 1110_18 in the Y direction. The venting suppression part VS_19 may not overlap with the short side gas pocket part GP_SS_N of the pouch cell 1110_18 and the short side gas pocket part GP_SS_P of the pouch cell 1110_19 in the Y direction. The venting suppression part VS_20 may not overlap with the short side gas pocket part GP_SS_P of the pouch cell 1110_19 and the short side gas pocket part GP_SS_P of the pouch cell 1110_20 in the Y direction. The venting suppression part VS_21 may not overlap with the short side gas pocket part GP_SS_P of the pouch cell 1110_20 and the short side gas pocket part GP_SS_N of the pouch cell 1110_21 in the Y direction. The venting suppression part VS_22 may not overlap with the short side gas pocket part GP_SS_N of the pouch cell 1110_21 and the short side gas pocket part GP_SS_N of the pouch cell 1110_22 in the Y direction. The venting suppression part VS_23 may not overlap with the short side gas pocket part GP_SS_N of the pouch cell 1110_22 and the short side gas pocket part GP_SS_P of the pouch cell 1110_23 in the Y direction. The venting suppression part VS_24 may not overlap with the short side gas pocket part GP_SS_P of the pouch cell 1110_23 and the short side gas pocket part GP_SS_P of the pouch cell 1110_24 in the Y direction. The venting suppression part VS_25 may not overlap with the short side gas pocket part GP_SS_P of the pouch cell 1110_24 in the Y direction.

### (Second embodiment)

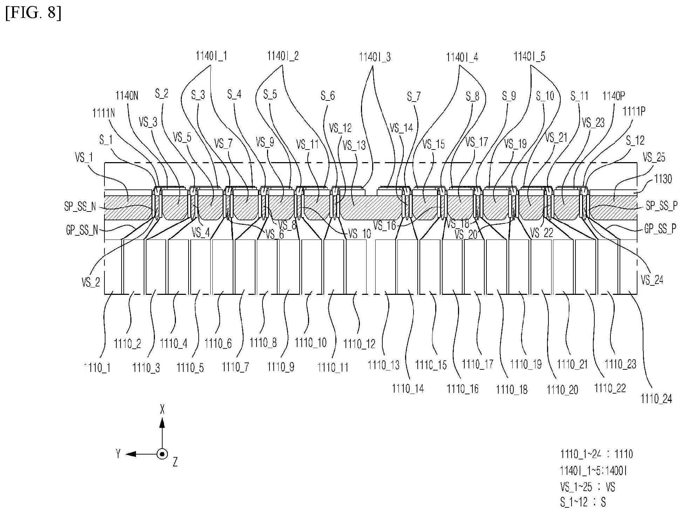

FIG. 8 is a drawing showing a battery module (1100) according to other embodiments.

Referring to FIG. 8, each of the plurality of venting suppression parts VS can overlap with the corresponding short side gas pocket part GP_SS_N or GP_SS_P of the plurality of pouch cells 1110 in the Y direction. The venting suppression part VS_1 can overlap with the short side gas pocket part GP_SS_N of the pouch cell 1110_1 in the Y direction. The venting suppression part VS_2 can overlap with the short side gas pocket part GP_SS_N of the pouch cell 1110_1 and the short side gas pocket part GP_SS_N of the pouch cell 1110_2 in the Y direction. The venting suppression part VS_3 can overlap with the short side gas pocket part GP_SS_N of pouch cell 1110_2 and the short side gas pocket part GP_SS_P of pouch cell 1110_3 in the Y-direction. The venting suppression part VS_4 can overlap with the short side gas pocket part GP_SS_P of pouch cell 1110_3 and the short side gas pocket part GP_SS_P of pouch cell 1110_4 in the Y direction. The venting suppression part VS_5 can overlap with the short side gas pocket part GP_SS_P of pouch cell 1110_4 and the short side gas pocket part GP_SS_N of pouch cell 1110_5 in the Y-direction. The venting suppression part VS_6 may overlap with the short side gas pocket part GP_SS_N of pouch cell 1110_5 and the short side gas pocket part GP_SS_N of pouch cell 1110_6 in the Y-direction. The venting suppression part VS_7 may overlap with the short side gas pocket part GP_SS_N of pouch cell 1110_6 and the short side gas pocket part GP_SS_P of pouch cell 1110_7 in the Y direction. The venting suppression part VS_8 may overlap with the short side gas pocket part GP_SS_P of pouch cell 1110_7 and the short side gas pocket part GP_SS_P of pouch cell 1110_8 in the Y direction. The venting suppression part VS_9 may overlap with the short side gas pocket part GP_SS_P of pouch cell 1110_8 and the short side gas pocket part GP_SS_N of pouch cell 1110_9 in the Y-direction. The venting suppression part VS_10 can overlap with the short side gas pocket part GP_SS_N of pouch cell 1110_9 and the short side gas pocket part GP_SS_N of pouch cell 1110_10 in the Y direction. The venting suppression part VS_11 may overlap with the short side gas pocket part GP_SS_N of pouch cell 1110_10 and the short side gas pocket part GP_SS_P of pouch cell 1110_11 in the Y direction. The venting suppression part VS_12 may overlap with the short side gas pocket part GP_SS_P of the pouch cell 1110_11 and the short side gas pocket part GP_SS_P of the pouch cell 1110_12 in the Y direction. The venting suppression part VS_13 may overlap with the short side gas pocket part GP_SS_P of the pouch cell 1110_12 and the short side gas pocket part GP_SS_N of the pouch cell 1110_13 in the Y direction. The venting suppression part VS_14 may overlap with the short side gas pocket part GP_SS_N of the pouch cell 1110_13 and the short side gas pocket part GP_SS_N of the pouch cell 1110_14 in the Y direction. The venting suppression part VS_15 may overlap with the short side gas pocket part GP_SS_N of the pouch cell 1110_14 and the short side gas pocket part GP_SS_P of the pouch cell 1110_15 in the Y direction. The venting suppression part VS_16 may overlap with the short side gas pocket part GP_SS_P of the pouch cell 1110_15 and the short side gas pocket part GP_SS_P of the pouch cell 1110_16 in the Y direction. The venting suppression part VS_17 may overlap with the short side gas pocket part GP_SS_P of pouch cell 1110_16 and the short side gas pocket part GP_SS_N of pouch cell 1110_17 in the Y direction. The venting suppression part VS_18 may overlap with the short side gas pocket part GP_SS_N of the pouch cell 1110_17 and the short side gas pocket part GP_SS_N of the pouch cell 1110_18 in the Y direction. The venting suppression part VS_19 may overlap with the short side gas pocket part GP_SS_N of the pouch cell 1110_18 and the short side gas pocket part GP_SS_P of the pouch cell 1110_19 in the Y direction. The venting suppression part VS_20 may overlap with the short side gas pocket part GP_SS_P of the pouch cell 1110_19 and the short side gas pocket part GP_SS_P of the pouch cell 1110_20 in the Y direction. The venting suppression part VS_21 may overlap with the short side gas pocket part GP_SS_P of the pouch cell 1110_20 and the short side gas pocket part GP_SS_N of the pouch cell 1110_21 in the Y direction. The venting suppression part VS_22 may overlap with the short side gas pocket part GP_SS_N of the pouch cell 1110_21 and the short side gas pocket part GP_SS_N of the pouch cell 1110_22 in the Y direction. The venting suppression part VS_23 may overlap with the short side gas pocket part GP_SS_N of the pouch cell 1110_22 and the short side gas pocket part GP_SS_P of the pouch cell 1110_23 in the Y direction. The venting suppression part VS_24 may overlap with the short side gas pocket part GP_SS_P of the pouch cell 1110_23 and the short side gas pocket part GP_SS_P of the pouch cell 1110_24 in the Y direction. The venting suppression part VS_25 may overlap with the short side gas pocket part GP_SS_P of the pouch cell 1110_24 in the Y direction.

Each of the plurality of venting suppression parts VS may not contact the corresponding short side gas pocket part GP_SS_N or GP_SS_P of the plurality of pouch cells 1110. The venting suppression part VS_1 may not contact the short side gas pocket part GP_SS_N of the pouch cell 1100_1. The venting suppression part VS_2 may not contact the short side gas pocket part GP_SS_N of the pouch cell 1100_1 and the short side gas pocket part GP_SS_N of the pouch cell 1100_2. The venting suppression part VS_3 may not be in contact with the short side gas pocket part GP_SS_N of the pouch cell 1100_2 and the short side gas pocket part GP_SS_P of the pouch cell 1100_3. The venting suppression part VS_4 may not contact the short side gas pocket part GP_SS_P of the pouch cell 1100_3 and the short side gas pocket part GP_SS_P of the pouch cell 1100_4. The venting suppression part VS_5 may not contact the short side gas pocket part GP_SS_P of the pouch cell 1100_4 and the short side gas pocket part GP_SS_N of the pouch cell 1100_5. The venting suppression part VS_6 may not be in contact with the short side gas pocket part GP_SS_N of the pouch cell 1100_5 and the short side gas pocket part GP_SS_N of the pouch cell 11006_. The venting suppression part VS_7 may not contact the short side gas pocket part GP_SS_N of the pouch cell 1100_6 and the short side gas pocket part GP_SS_P of the pouch cell 1100_7. The venting suppression part VS_8 may not contact the short side gas pocket part GP_SS_P of the pouch cell 1100_7 and the short side gas pocket part GP_SS_P of the pouch cell 1100_8. The venting suppression part VS_9 may not contact the short side gas pocket part GP_SS_P of the pouch cell 1100_8 and the short side gas pocket part GP_SS_N of the pouch cell 1100_9. The venting suppression part VS_10 may not be in contact with the short side gas pocket part GP_SS_N of the pouch cell 1100_9 and the short side gas pocket part GP_SS_N of the pouch cell 1100_10. The venting suppression part VS_11 may not be in contact with the short side gas pocket part GP_SS_N of the pouch cell 1100_10 and the short side gas pocket part GP_SS_P of the pouch cell 1100_11. The venting suppression part VS_12 may not contact the short side gas pocket part GP_SS_P of the pouch cell 1100_11 and the short side gas pocket part GP_SS_P of the pouch cell 1100_12. The venting suppression part VS_13 may not be in contact with the short side gas pocket part GP_SS_P of the pouch cell 1100_12 and the short side gas pocket part GP_SS_N of the pouch cell 1100_13. The venting suppression part VS_14 may not contact the short side gas pocket part GP_SS_N of the pouch cell 1100_13 and the short side gas pocket part GP_SS_N of the pouch cell 1100_14. The venting suppression part VS_15 may not be in contact with the short side gas pocket part GP_SS_N of the pouch cell 1100_14 and the short side gas pocket part GP_SS_P of the pouch cell 1100_15. The venting suppression part VS_16 may not contact the short side gas pocket part GP_SS_P of the pouch cell 1100_15 and the short side gas pocket part GP_SS_P of the pouch cell 1100_16. The venting suppression part VS_17 may not contact the short side gas pocket part GP_SS_P of the pouch cell 1100_16 and the short side gas pocket part GP_SS_N of the pouch cell 1100_17. The venting suppression part VS_18 may not contact the short side gas pocket part GP_SS_N of the pouch cell 1100_17 and the short side gas pocket part GP_SS_N of the pouch cell 1100_18. The venting suppression part VS_19 may not be in contact with the short side gas pocket part GP_SS_N of the pouch cell 1100_18 and the short side gas pocket part GP_SS_P of the pouch cell 1100_19. The venting suppression part VS_20 may not contact the short side gas pocket part GP_SS_P of the pouch cell 1100_19 and the short side gas pocket part GP_SS_P of the pouch cell 1100_20. The venting suppression part VS_21 may not be in contact with the short side gas pocket part GP_SS_P of the pouch cell 1100_20 and the short side gas pocket part GP_SS_N of the pouch cell 1100_21. The venting suppression part VS_22 may not contact the short side gas pocket part GP_SS_N of the pouch cell 1100_21 and the short side gas pocket part GP_SS_N of the pouch cell 1100_22. The venting suppression part VS_23 may not be in contact with the short side gas pocket part GP_SS_N of the pouch cell 1100_22 and the short side gas pocket part GP_SS_P of the pouch cell 1100_23. The venting suppression part VS_24 may not contact the short side gas pocket part GP_SS_P of the pouch cell 1100_23 and the short side gas pocket part GP_SS_P of the pouch cell 1100_24. The venting suppression part VS_25 may not be in contact with the short side gas pocket part GP_SS_P of the pouch cell 1100_24.

### (Third embodiment)

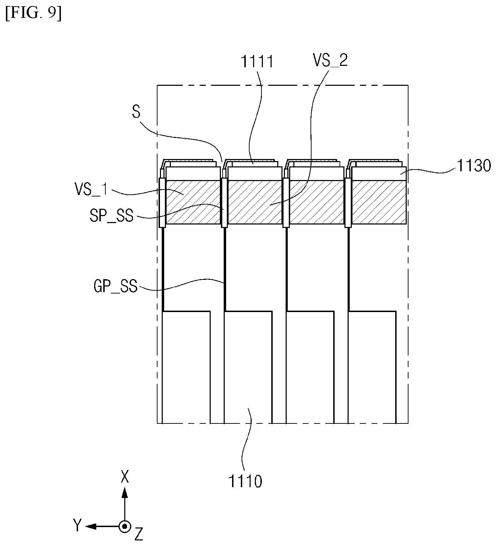

FIG. 9 is a drawing showing a battery module 1100 according to other embodiments.

Referring to FIG. 9, only one electrode lead 1111 can pass through each of the plurality of slits S.

The venting suppression part VS_1 can contact one surface of the short side sealing part S_SS of the pouch cell 1110. The venting suppression part VS_2 can contact the opposite surface of the one surface of the short side sealing part S_SS of the pouch cell 1110.

### (Fourth embodiment)

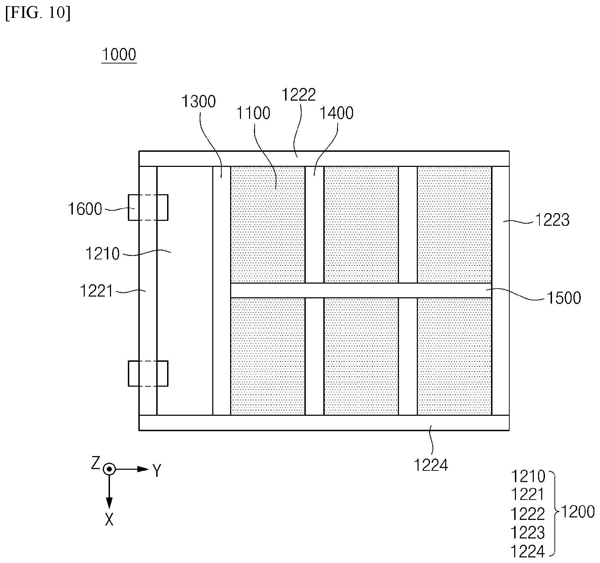

FIG. 10 is a drawing showing a battery pack 1000 according to some embodiments.

Referring to FIG. 10, the battery pack 1000 may include a plurality of battery modules 1100, a pack housing 1200, a first partition wall 1300, second partition walls 1400, a third partition wall 1500, exhaust devices 1600, and a lid. The battery pack 1000 may be the final form of the battery system mounted on the mobility device.

Each of the plurality of battery modules 1100 may be identical to those described above.

In FIG. 10, the number of battery modules 1100 is six, but this is merely illustrative. The number of battery modules 1100 may be determined based on the magnitude of current and/or voltage required by the battery pack 1000. In FIG. 10, the arrangement of the plurality of battery modules 1100 is two rows and three columns, but this is merely illustrative. The arrangement of the plurality of battery modules 1100 may be determined based on the number of the plurality of battery modules 1100 and the required X and Y direction lengths of the battery pack 1000. This disclosure describes only an embodiment where the number of battery modules 1100 is six and the arrangement is two rows and three columns. A person skilled in the art will readily arrive at other embodiments with different numbers and arrangements of battery modules 1100 based on this disclosure.

The pack housing 1200 may include a base plate 1210 and side walls 1221, 1222, 1223, 1224. The base plate 1210 may support the plurality of battery modules 1100, the side walls 1221, 1222, 1223, 1224, the first partition wall 1300, the second partition walls 1400, the third partition wall 1500, and electrical components. The base plate 1210 may be substantially perpendicular to the Z-direction. The base plate 1210 may be provided by an extrusion process. The extrusion direction of the base plate 1210 may be the Y-direction. The base plate 1210 may include a plurality of cooling channels. The plurality of cooling channels may be formed by an extrusion process. The plurality of cooling channels may be parallel to the Y direction. The plurality of cooling channels may be spaced apart from each other in the X direction.

Side walls 1221, 1222, 1223, 1224 may be positioned around the perimeter of the base plate 1210. The side walls 1221, 1222, 1223, 1224 may enclose the plurality of battery modules 1100, the first partition wall 1300, the second partition walls 1400, the third partition wall 1500, and the electrical components. The side walls 1221, 1223 may be substantially perpendicular to the Y direction. The side walls 1222, 1224 may be substantially perpendicular to the X direction.

An exhaust device 1600 may be installed on one or more of the side walls 1221, 1222, 1223, 1224. The exhaust device 1600 may be configured to provide a path for high-temperature gas, flames, and particles within the battery pack 1000 to be discharged outside the battery pack 1000 in the event of a thermal runaway event occurring within the battery pack 1000. The exhaust device 1600 may be configured to prevent dust, moisture, water, etc., from outside the battery pack 1000 from entering the interior of the battery pack 1000.

The first partition wall 1300 may extend in the X direction between the side walls 1222, 1224. The first partition wall 1300 may be substantially perpendicular to the Y direction. The first partition wall 1300 may be positioned between the electrical components and the plurality of battery modules 1100.

The electrical components may be positioned between the side wall 1221 and the first partition wall 1300. The electrical components may include a battery management system (BMS), a power relay assembly PRA, etc. The BMS may be configured to monitor the state of plurality of battery cells 1110, such as voltage, current, and temperature; to uniformly balance voltage and capacity among the plurality of battery cells 1110; and to control the charging and discharging of the plurality of battery cells 1110. The PRA may be configured to connect or disconnect high-voltage circuits according to signals from the BMS, thereby supplying or disconnecting the high-voltage current from the plurality of battery modules 1100 to external loads such as the motor and inverter. The PRA may be configured to mitigate voltage surges, preventing damage to external loads such as the motor and inverter.

Second partition walls 1400 may be positioned between the plurality of battery modules 1100. When the plurality of battery modules 1100 are arranged in M rows and N columns (where M and N are integers greater than or equal to 2), the columns may be separated by the second partition walls 1400. The second partition walls 1400 may extend in the X direction between the side walls 1222 and the third partition wall 1500 or between the side walls 1224 and the third partition wall 1500. The second partition walls 1400 may be substantially perpendicular to the Y direction.

The third partition wall 1500 may be positioned between the plurality of battery modules 1100. When the plurality of battery modules 1100 are arranged in M rows and N columns (where M and N are integers greater than or equal to 2), the rows may be separated by the third partition wall 1500. The third partition wall 1500 may extend in the Y direction between the first partition wall 1300 and the side walls 1223. The third partition wall 1500 may be substantially perpendicular to the X direction.

It may be coupled to the side walls 1221, 1222, 1223, 1224 by a lid fastener. The lid may cover the plurality of battery modules 1100, the first partition wall 1300, the second partition walls 1400, the third partition wall 1500, and electrical components. The lid may be substantially perpendicular to the Z direction.

The present disclosure has been described in more detail above through drawings and embodiments. However, the configurations described in the drawings or embodiments described in this specification are only one embodiment of the present disclosure and do not represent all the technical ideas of the present disclosure, and it should be understood that various equivalents and modifications that can replace them may exist at the time of filing this application.

### [Description of Reference Numerals]

1000: BATTERY PACK
1100: BATTERY MODULE
1110: POUCH CELL
C: CENTER PART
SP: SEALING PART
GP: GAS POCKET PART
F: FOLDING PART
1111: ELECTRODE LEAD
1120: MODULE FRAME
1130: BUSBAR FRAME
S: SLIT
VS: VENTING SUPPRESSION PART
1140: BUSBAR
1150: INSULATION COVER
1160: END PLATE
1200: PACK HOUSING
1300: FIRST PARTITION WALL
1400: SECOND PARTITION WALL
1500: THIRD PARTITION WALL
1600: EXHAUST DEVICE

## Claims

1. A battery module comprising:
a plurality of pouch cells arranged in a first direction, wherein each of the plurality of pouch cells comprises an electrode lead protruding in a second direction perpendicular to the first direction;
a module frame accommodating the plurality of pouch cells and open in the second direction;
busbars electrically connected to the plurality of electrode leads of the plurality of pouch cells; and
a busbar frame supporting the busbars and comprising a plurality of slits and a plurality of venting suppression parts, wherein
each of the plurality of pouch cells comprises a center part where an electrode assembly is located, a gas pocket part at an edge of the center part, and a sealing part at an edge of the gas pocket part, wherein
the electrode lead of a corresponding one of the plurality of pouch cells passes through each of the plurality of slits, and
the plurality of venting suppression parts overlap with a portion of the sealing part of a corresponding one of the plurality of pouch cells in the first direction.

2. The battery module of claim 1, wherein
each of the plurality of pouch cells has a rectangular shape,
the sealing part comprises a short side sealing part and a long side sealing part, and
the plurality of venting suppression parts overlap with the short side sealing part of a corresponding one of the plurality of pouch cells in the first direction.

3. The battery module of claim 2, wherein
the plurality of battery cells comprises a first battery cell comprising a first electrode lead and a first short side sealing part,
the plurality of slits comprises a first slit,
the plurality of venting suppression parts comprises a first venting suppression part and a second venting suppression part that guide the first electrode lead to the first slit,
the first venting suppression part contacts one surface of the first short side sealing part, and
the second venting suppression part contacts an opposite surface of the one surface of the first short side sealing part.

4. The battery module of claim 2, wherein
the plurality of battery cells comprises a first battery cell comprising a first electrode lead and a first short side sealing part, and a second battery cell comprising a second electrode lead and a second short side sealing part,
the plurality of slits comprises a first slit,
the plurality of venting suppression parts comprise a first venting suppression part that guides the first electrode lead to the first slit, a second venting suppression part that guides the second electrode lead to the first slit, and a third venting suppression part that guides the first electrode lead and the second electrode lead to the first slit and is located between the first venting suppression part and the second venting suppression part,
the first venting suppression part contacts one surface of the first short side sealing part,
the second venting suppression part contacts one surface of the second short side sealing part, and
the third venting suppression part contacts an opposite surface of the one surface of the first short side sealing part and an opposite surface of the one surface of the second short side sealing part.

5. The battery module of claim 2, wherein
the gas pocket part comprises a short side gas pocket part and a long side gas pocket part, and
the plurality of venting suppression parts do not overlap with the short side gas pocket part of a corresponding one of the plurality of pouch cells in the first direction.

6. The battery module of claim 2, wherein
the gas pocket part comprises a short side gas pocket part and a long side gas pocket part, and
each of the plurality of venting suppression parts overlaps with the short side gas pocket part of a corresponding one of the plurality of pouch cells in the first direction.

7. The battery module of claim 6, wherein
each of the plurality of venting suppression parts does not contact the short side gas pocket part of a corresponding one of the plurality of pouch cells.

8. The battery module of claim 1, wherein
the module frame comprises a top plate comprising a plurality of vent holes.

9. A battery pack comprising:
a pack housing comprising a base plate and side walls;
a plurality of battery modules on the pack housing; and
a lid covering the plurality of battery modules and coupled to the pack housing, wherein
each of the plurality of battery modules comprises:
a plurality of pouch cells arranged in a first direction, wherein each of the plurality of pouch cells comprises an electrode lead protruding in a second direction perpendicular to the first direction;
a module frame accommodating the plurality of pouch cells and open in the second direction;
busbars short-circuited with the plurality of electrode leads of the plurality of pouch cells; and
a busbar frame supporting the busbars and comprising a plurality of slits and a plurality of venting suppression parts, wherein
each of the plurality of pouch cells comprises a center part where an electrode assembly is located, a gas pocket part at an edge of the center part, and a sealing part at an edge of the gas pocket part,
the electrode lead of a corresponding one of the plurality of pouch cells passes through each of the plurality of slits, and
the plurality of venting suppression parts overlap with a portion of the sealing part of a corresponding one of the plurality of pouch cells in the first direction.

10. The battery pack of claim 9, wherein
the module frame comprises a top plate comprising a plurality of vent holes.

11. The battery pack of claim 9, further comprising:
at least one or more exhaust devices disposed on at least one of the side walls.
